**Europäisches Patentamt**

**European Patent Office**

**Office européen des brevets**

(19)

(11) Veröffentlichungsnummer: **0 155 988**
**B1**

(12)

# EUROPÄISCHE PATENTSCHRIFT

(45) Veröffentlichungstag der Patentschrift:
**06.09.89**

(21) Anmeldenummer: **84110024.1**

(22) Anmeldetag: **22.08.84**

(51) Int. Cl.⁴: **B 60 C 27/06**

(54) Gleitschutzvorrichtung für Fahrzeugreifen.

(30) Priorität: **26.03.84 IT 2136184 U**

(43) Veröffentlichungstag der Anmeldung:
**02.10.85 Patentblatt 85/40**

(45) Bekanntmachung des Hinweises auf die Patenterteilung:
**06.09.89 Patentblatt 89/36**

(84) Benannte Vertragsstaaten:
**AT BE CH FR GB LI NL SE**

(56) Entgegenhaltungen:
**EP-A- 0 081 792**
**DE-U- 8 304 064**
**FR-A- 522 878**
**US-A- 1 511 685**
**US-A- 2 493 263**
**US-A- 2 639 753**
**US-A- 2 657 728**

(73) Patentinhaber: **ACCIAIERIE WEISSENFELS S.P.A.,**
**Tarvisio, I-33010 Fusine Valromana (IT)**

(72) Erfinder: **Melzi, Carlo, Dr. Ing., I-33010 Fusine Valromana**
**Tarvisio (IT)**
Erfinder: **Gregorutti, Paolo, Dr. Ing., I-33010 Fusine**
**Valromana Tarvisio (IT)**

(74) Vertreter: **Geyer, Werner, Dr.-Ing., Patentanwaltskanzlei**
**Dr. Werner Geyer Hermann-Vogel-Strasse 12,**
**D-8000 München 40 (DE)**

## Beschreibung

Die Erfindung bezieht sich auf eine Gleitschutzvorrichtung für Fahrzeugreifen mit einer gegen die Innenseite des Reifens zur Anlage kommenden inneren sowie mit einer äußeren Halterung für sich über die Reifenlauffläche erstreckende Kettenstrangabschnitte, bei der die innere Halterung in montiertem Zustand etwa kreisförmig ausgebildet ist und einen mittleren Halterungsabschnitt aufweist, an dessen beiden Enden jeweils über ein Drehgelenk ein Seitenteil verschwenkbar befestigt ist, wobei die Seitenteile zur Montage der inneren Halterung vom mittleren Halterungsabschnitt nach außen aufklappbar und jeweils mittels einer Federeinrichtung in Richtung auf eine geschlossene Form der inneren Halterung hin vorgespannt sind.

Bei einer Gleitschutzkette der genannten Art (DE-U-83 04 064) ist eine sehr leichte Montage bei völlig unkomplizierter Bedienungsweise möglich. Denn zur Montage müssen von der Bedienungsperson nur die beiden Seitenteile der inneren Halterung mit den Händen ergriffen und soweit gegenüber dem Mittelteil radial nach außen verschwenkt werden, bis die innere Halterung über die Lauffläche des Reifens übergeschoben werden kann. Hiernach muß die Montageperson nurmehr die beiden Seitenteile freigeben, wonach diese sofort auf der Reifeninnenseite automatisch in die Position der geschlossenen Halterung eingeschwenkt werden, in der sie dann auch noch weiterhin unter einer vorgegebenen Vorspannung gehalten sind.

Es hat sich jedoch gezeigt, daß bei der Ausbildung der vorbekannten Gleitschutzkette mit nur einem starren Mittelteil, an dem die Seitenteile befestigt sind, die Montage insbesondere bei sehr kleinen Radkästen und relativ zum Reifen tiefliegenden Kotflügeln vereinzelt zu gewissen Montagegeschwierigkeiten führen kann, nämlich dann, wenn das starre Mittelteil nach dem Aufspreizen der Seitenteile infolge seiner vorgegebenen Kreisbogenabschnittsform etwas zu hoch nach oben vorsteht. Bei großen Fahrzeugen, bei denen die Radkästen ausreichenden Platz bieten, wirkt sich dies bei der Montage so gut wie nicht unangenehm aus. Bei kleinen Fahrzeugen jedoch, bei denen die Radkästen relativ klein und eng ausgebildet sind, kann es hier doch zu Montagebehinderungen kommen.

Um dem abzuhelfen und auch bei engen Radkästen eine weitere Erleichterung bei der Montage unter Beibehaltung der ansonsten vorteilhaften Eigenschaften der gattungsgemäßen Kette zu erreichen, wird nach der Erfindung vorgeschlagen, bei einer solchen Gleitschutzkette den mittleren Halterungsabschnitt aus mindestens zwei Teilabschnitten bestehend auszuführen, die relativ zueinander verschwenkbar sind, miteinander verbunden sind und auch in Richtung auf eine geschlossene Form der inneren Halterung hin vorgespannt sind. Die Vorspannung wird dabei vorzugsweise mittels geeigneter Federeinrichtungen oder elastischer Einsätze ausgelöst. Durch die erfindungsgemäßen Maßnahmen wird erreicht, daß beim Auseinanderspreizen der beiden Seitenteile und der Montage der mittlere Halterungsabschnitt seine kreisbogenabschnittsförmige Form nicht ungeändert beibehält, sondern seinerseits durch die Unterteilung in zwei oder mehr Teilabschnitte, die jeweils miteinander gelenkig verbunden und in Richtung auf eine geschlossene Halterung hin gegenseitig vorgespannt sind, eine «Abflachung» derart erfährt, daß der Überstand des mittleren Halterungsteiles (Überstand nach oben) geringer ist als im Falle dessen einstückiger Ausbildung. Ein bereits deutlich platzsparender Effekt zeigt sich schon, wenn der mittlere Halterungsabschnitt in zwei Teilabschnitte unterteilt wird. Von besonderem Vorteil ist es dabei, wenn durch geeignete Maßnahmen sichergestellt wird, daß ein Aufspreizen aller Einzelteile der hinteren Halterung relativ zueinander nur in Richtung einer Öffnungsbewegung hinsichtlich der Kreisform (d.h. grundsätzlich nur ein Aufspreizen nach außen) möglich ist.

Vorteilhafterweise werden die Teilabschnitte im Endbereich ihrer einander zugewandten Ecken über ein Drehgelenk oder ein elastisches Gelenk miteinander verbunden. Als elastisches Gelenk kämen hier z.B. geeignete Gelenke oder Zwischenstücke aus elastischem Kunststoff in Frage.

Wie bereits ausgeführt, besteht eine ganz besonders vorzugsweise Ausgestaltung der Erfindung darin, den mittleren Halterungsabschnitt aus zwei Teilabschnitten aufzubauen. Für bestimmte Einsatzfälle kann es jedoch auch von Vorteil sein, mehr Teilabschnitte einzusetzen, wobei drei bis fünf Teilabschnitte für den mittleren Halterungsabschnitt vorteilhafterweise eingesetzt werden können.

Vorzugsweise sind für die Vorspannung der Teilabschnitte jeweils Schenkelfedern eingesetzt, die sich einerseits in ihrem Mittelbereich am Drehgelenk sowie andererseits mit ihren Schenkeln jeweils an den einzelnen Teilabschnitten abstützen. Hierdurch ergibt sich eine einfach aufgebaute und leicht herstellbare Ausbildung, bei der relativ wenig Platz benötigt wird und die auch sehr kostengünstig herstellbar ist. Solche Schenkelfedern lassen sich einfach und leicht herstellen, wobei es sich dann empfiehlt, für alle Drehgelenke an der inneren Halterung gleich geformte Schenkelfedern einzusetzen.

Von Vorteil ist weiterhin, wenn für einige oder alle Drehgelenke Anschläge derart angeordnet sind, daß jeweils zwei Teilabschnitte bei Erreichen einer gegenseitigen Lage, in der sie gemeinsam einen Kreisbogenabschnitt bilden (d.h. die beiden Teile liegen in ihrer Montage-Endhaltung nebeneinander), gegen eine weitere Verschwenkung in Richtung der Vorspannung blockiert sind. Vorzugsweise können hierbei auch noch zusätzliche Anschläge derart vorgesehen sein, daß die Teilabschnitte nur um einen vorgegebenen Spreizwinkel zueinander verschwenkbar sind. Hierdurch läßt sich ein versehentliches Überspreizen der hinteren Halterung verhindern und damit auch eine Erleichterung der Montage erzielen.

Eine besonders einfache, zweckmäßige, rasch montierbare und kostengünstige Ausgestaltung der erfindungsgemäßen Gleitschutzvorrichtung besteht darin, daß die Enden je zweier drehbar aneinander befestigter Teilabschnitte jeweils über das Drehgelenk etwas vorstehen und daß im Bereich dieser freien Enden jeweils Anschläge am anderen Teilabschnitt befestigt sind, die wie eine U-förmige Klammer ausgebildet sind und den Teilabschnitt derart umfassen, daß zwischen dem mittleren die beiden Klammerschenkel verbindenden Zwischensteg der Klammer und einer Seitenfläche des Teilabschnitts ein Spalt ausgebildet wird, in den das über das Drehgelenk überstehende freie Ende des anderen Teilabschnittes eingreift. Wenn dann beim Aufspreizen ein zu großer Spreizwinkel eintreten würde, läuft das freie Ende des anderen Teilabschnitts innerhalb des Spaltes gegen einen der beiden das Ende des Spaltes begrenzenden Klammerschenkel, der dort als Anschlag dient. Die Höhe des Spaltes bestimmt dabei den Aufspreizwinkel.

Vorteilhafterweise wird hierbei der Anschlag sogar als eine den Profilquerschnitt des Teilabschnitts vollständig umschließende Rundklammer ausgebildet, deren Querschnitt so geformt ist, daß ihre Innenflächen parallel zu den Außenflächen des Profilquerschnitts des Teilabschnittes verlaufen und die auf einer Seite des Teilabschnittes von diesem zur Ausbildung des genannten Spaltes übersteht.

Die Erfindung wird nachfolgend anhand der Zeichnung im Prinzip beispielshalber noch näher erläutert. Es zeigen:

Fig. 1 eine Ansicht auf eine erfindungsgemäße Halterung einer Gleitschutzvorrichtung (Ansicht in Richtung auf die Reifeninnenseite hin),

Fig. 2 einen vergrößerten Detailausschnitt der Halterung aus Fig. 1 zur Darstellung der Verhältnisse in einem Gelenkbereich zwischen zwei Teilabschnitten,

Fig. 3 eine Draufsicht auf die Darstellung nach Fig. 2,

Fig. 4 und Fig. 5 zwei Ausgestaltungen für eine Schnittmöglichkeit gemäß A–A in Fig. 2,

Fig. 6 eine erfindungsgemäße Halterung in aufgespreizter Stellung (wobei strichliert der Fall eines im Stand der Technik bekannten einstückigen Mittelabschnittes konstanter Form angegeben ist).

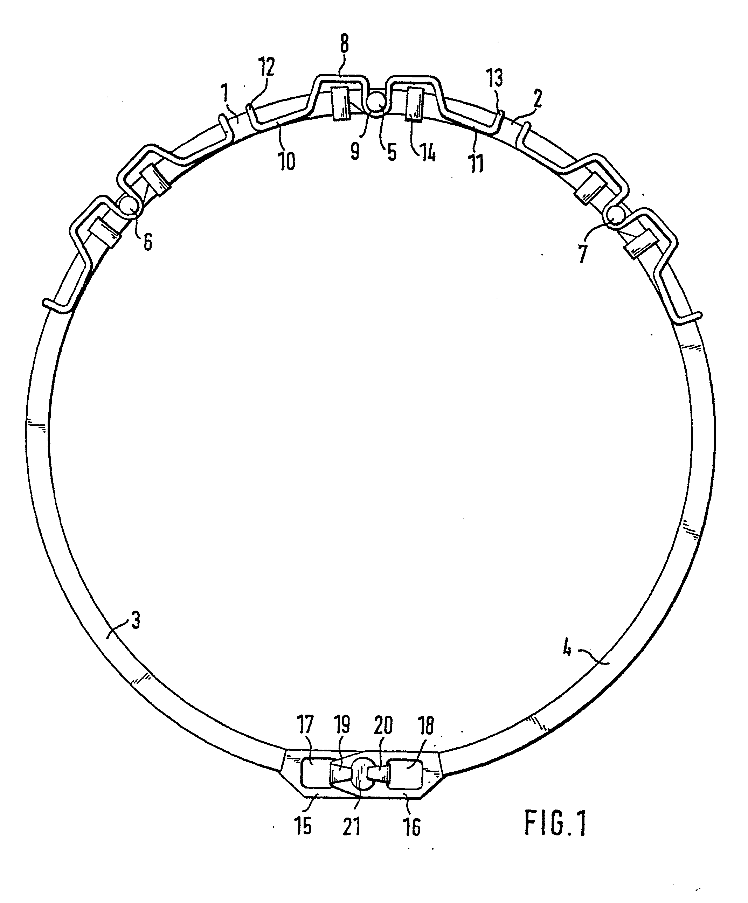

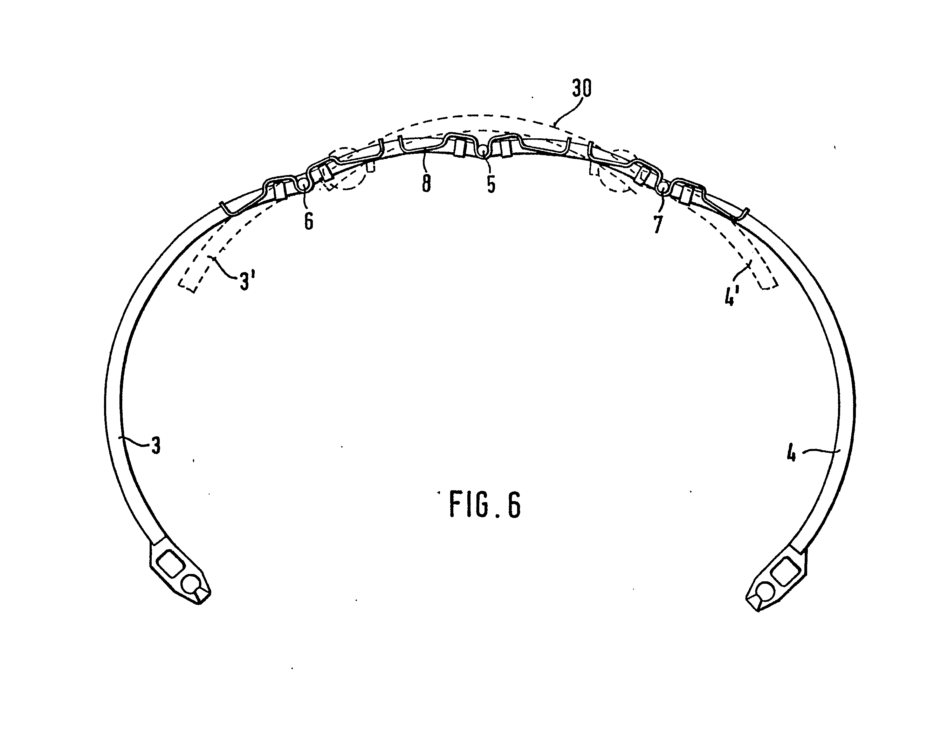

Bei der Darstellung nach Fig. 1 und Fig. 6 ist jeweils nur die innere Halterung einer Gleitschutzvorrichtung gezeigt und zwar in einer Blickrichtung auf die Radinnenseite hin, wobei jedoch weder die äußere Halterung, noch die Kettenstrangabschnitte, die sich über die Lauffläche des Reifens erstrecken, noch deren Befestigungspunkte an der Halterung im Interesse einer klareren Darstellung gezeigt sind.

Die in Fig. 1 gezeigte innere Halterung besteht oben aus einem mittleren Halterungsabschnitt, der aus den Teilabschnitten 1 und 2 besteht, wobei am freien Ende jedes der Teilabschnitte 1 und 2 über Gelenke 6 bzw. 7 Seitenteile 3 bzw. 4 verschwenkbar angebracht sind. Auch die beiden Teilabschnitte 1 und 2 des mittleren Abschnitts der gezeigten Halterung sind über ein Gelenk 5 miteinander derart verbunden, daß sie relativ zueinander verschwenkt werden können. Dabei ist, worauf noch zurückzukommen sein wird, durch geeignete Wahl von Anschlägen Sorge getragen, daß ein Verdrehen der einzelnen Teilabschnitte der hinteren Halterung nur in Richtung auf ein Aufspreizen des Kreisquerschnittes, nicht in Richtung auf eine Verkleinerung desselben möglich ist.

An dem Gelenk 5 zwischen den Teilabschnitten 1 und 2 ist ebenso wie an den Gelenken 6 und 7, an denen die Seitenteile 3 und 4 befestigt sind, (jeweils) eine Schenkelfeder 8 angebracht: die Schenkelfeder hat eine geeignete Form, mittels derer sie sich in ihrem mittleren Teil am Gelenk 5 (dieses von unten umlaufend) anstützt, während sich ihr einer Schenkel 10 über sein hakenförmig ausgebildetes Ende 12, das von oben her den Teilabschnitt 1 übergreift, auf diesem abstützt und der andere Schenkel 11 der Schenkelfeder 8 sich mit seinem hakenförmig ausgebildeten Ende 13 wiederum von oben den Teilabschnitt 2 übergreifend auf diesem abstützt. Auf die in den Figuren, insbesondere den Fig. 1, 2 und 3 gezeigte spezielle Ausführung und Formgebung der Schenkelfedern 10 sei ausdrücklich verwiesen. Durch die geeignete Ausbildung der Schenkelfeder wird sichergestellt, daß die beiden Teilabschnitte 1 und 2 in Richtung auf eine geschlossene Form der inneren Halterung hin (d.h. in Richtung auf eine Einnahme des Kreisquerschnittes) vorgespannt werden. Die Kraft der Federschenkeln 10 und 11 wirkt jeweils an den hakenförmigen Enden 12 und 13 von der radial außen liegenden Seite her auf die Teilabschnitte 1 und 2, so daß diese in Richtung auf ein Zusammenklappen gedrückt werden. Dadurch, daß die Schenkelfeder 8 jedoch in ihrem mittleren Abschnitt eine Einbuchtung 9 aufweist, mittels derer sie sich so an dem Gelenk 5 (etwa einem überstehenden Gelenkbolzen, einer Drehachse o.ä.) abstützt, daß dieses radial nach außen gedrückt wird, läßt sich in einfacher Form die gewünschte Vorspannung in Richtung auf eine geschlossene Stellung hin durch eine einfache, aber wirkungsvolle Ausbildung und Abstützung solcher Schenkelfedern 8 erzielen.

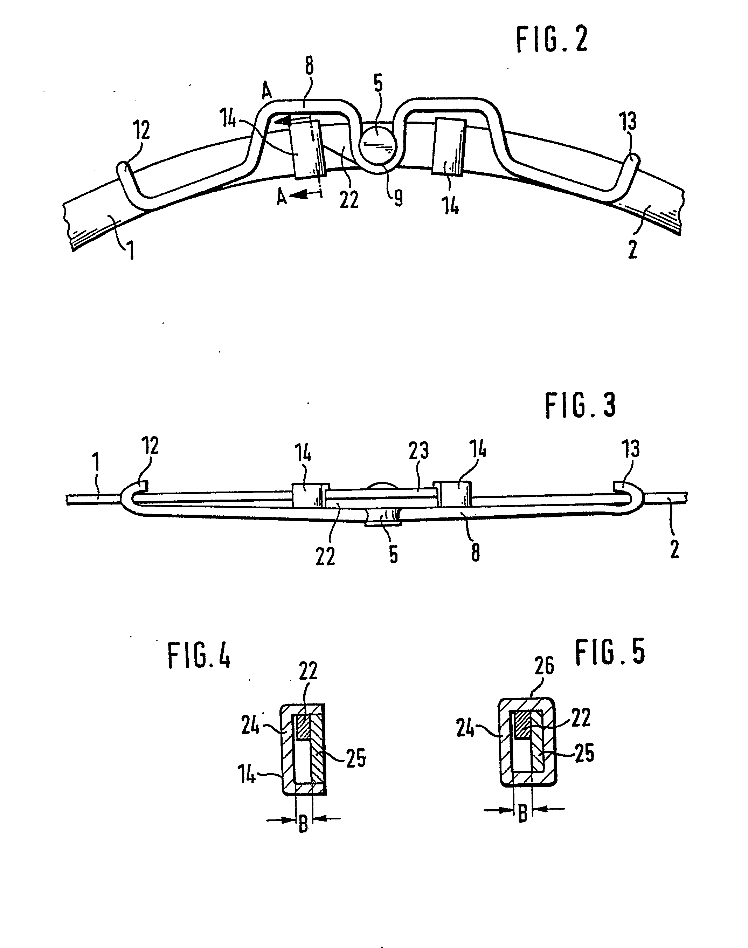

Wie in den Figuren 1 und 2 gesehen werden kann, befindet sich das Gelenk 5 zwischen den beiden Teilabschnitten 1 und 2 nicht direkt am Ende der Teilabschnitte angebracht, sondern um einen gewissen Abstand vom Ende der Teilabschnitte entfernt. In Fig. 2 ist ersichtlich, daß z.B. der Teilabschnitt 2 mit seinem Ende 22 noch über das Gelenk 5 übersteht. Dabei ist die radial außen liegende Fläche in Verlängerung der radial außenliegenden Fläche des Teilabschnittes 2 ausgeführt, während die Unterseite des überstehenden Teiles, wie in Fig. 2 gezeigt, einen abgeschrägten Verlauf hat. Diese überstehende «Nase» 22, die vom Ende des Seitenteiles 2 ausgebildet wird, ragt in einen Spalt B (vgl. Fig. 4 und 5) hinein, der zwischen dem Mittelsteg 24 der U-förmig ausgebildeten Anschlagkammer 14 einerseits und der diesem zugewendeten Seitenfläche des Profilquerschnitts 25 des Endes 22 des Teilabschnittes 2 ausgebildet wird. Die Anschlagklammer 14 übergreift, wie in Fig. 4 im Querschnitt gezeigt, mit ihren Seitenschenkeln von oben und unten her den Profilquerschnitt 25 und ist dort in geeigneter Weise an diesem befestigt. Eine solche Befestigung kann z.B. über seitliches Anschweißen, Verkleben o.ä. erfolgen. Der Anschlag kann jedoch auch derart ausgebildet sein, wie dies in Fig. 5 gezeigt ist, nämlich in Form eines rundum laufenden Hohlquerschnittes («Rundklammer») 26, der sich vom Querschnitt aus Fig. 4 nur dadurch unterscheidet, daß die beiden Seitenschenkel der Klammer 14 hier zu einem Vollquerschnitt ergänzt sind. Die Rundklammer steht einseitig unter Ausbildung des Spaltes B über eine Seitenfläche des Teilabschnitts 2 (Profilquerschnitt 25) über, wobei auch hier wiederum der Querschnitt des freien Endes 22 des Seitenteiles 2 in diesen Spalt eingreift und dort von oben nach unten entsprechend der Verdrehung beweglich ist. Die in den Fig. 2, 4 und 5 gezeigte Stellung ist die Ruhestellung (Montageendstellung), bei welcher das Ende 22 des Teilabschnitts 2 (bzw. das entsprechende, in Fig. 2 auf der Rückseite liegende Ende 23 des Teilabschnitts 1) innerhalb des Spaltes B oben an dem Anschlag 14 bzw. 26 anschlägt. Hierdurch ist sichergestellt, daß unter Einwirkung der Federkräfte die beiden Teilabschnitte 1 und 2 nur soweit zueinander verschwenkt werden, bis ein Kreisbogenabschnitt erreicht ist: ein weitergehendes Zusammenklappen ist wegen dieser Anschlagsgestaltung nicht möglich (und für die Praxis auch wohl nicht erwünscht). Anschläge 14 sind sowohl für das freie Ende 22 des Seitenteiles 2, wie auch für das freie Ende 23 (vgl. Fig. 3) des Seitenteils 1 vorgesehen, wobei die beiden Spalte B jeweils auf unterschiedlichen Seiten der hinteren Halterung ausgebildet werden.

Gleichermaßen wie die Anordnung in Fig. 2 kann auch die Anordnung an den Gelenkpunkten 6 und 7 zwischen jeweils einem Teilabschnitt 1 bzw. 2 und dem daran angelenkten Seitenteil 3 bzw. 4 gewählt werden, worauf nur verwiesen ist.

Aus Fig. 1 ist ersichtlich, daß die Seitenteile 3 und 4 an ihren freien, einander zugewendeten Enden mit einer geeigneten Verriegelungsvorrichtung versehen sind, die im gezeigten Beispiel jeweils aus einem plattenartigen Endteil 15 bzw. 16 besteht. Jedes dieser Endteile weist an seinem freien Ende eine entgegen der Schließrichtung umgebogene Nase 19 bzw. 20 sowie eine Eingreiföffnung 17 bzw. 18 auf: beim Schließen laufen zunächst die hakenförmig umgebogenen Nasen 19 bzw. 20 mit ihren Biegestellen gegeneinander an, wodurch eine von beiden nach hinten und eine nach vorne ausgelenkt wird. Der Schließvorgang setzt sich dann weiter fort, bis die auf der der Radflanke zugewendeten Seite liegende Nase soweit auf das andere Seitenteil hinbewegt ist, bis sie dort in dessen Öffnung 18 einhaken kann. Durch die Anordnung geeigneter Magnete 21 kann besonders leicht sichergestellt werden, daß auch in eingehakter Stellung der Nase 20 zusätzlich noch die beiden Endteile 15 und 16 über die gegenseitigen Magneten aneinander angezogen werden.

Fig. 6 zeigt schließlich, nur prinzipiell, eine erfindungsgemäße Halterung, bei der die Seitenteile 3 und 4 zur Montage gespreizt wurden. Dabei ist in diese Figurendarstellung strichliert der Fall der gattungsgemäßen, vorbekannten Gleitschutzvorrichtung eingetragen, bei der der mittlere Abschnitt 30 eine starre Form aufweist. Die Seitenteile sind dort mit 3' und 4' bezeichnet. Man kann erkennen, daß bei der erfindungsgemäßen inneren Halterung eine deutliche Verflachung im mittleren Halterungsabschnitt (d.h. der Abschnitt der inneren Halterung, der zwischen den Anlenkstellen 6 und 7 der Seitenteile 3 und 4 ausgebildet wird) eintritt. Demgegenüber ist bei der starren Form des mittleren Abschnitts bei der gattungsgemäßen Kette ein deutlich größerer Überstand erkennbar.

Vorteilhafterweise werden die einzelnen Teile der inneren Halterung aus Flachblech gefertigt, wie dies aus den Figurendarstellungen der Fig. 2 bis 5 erkennbar ist. Anstelle der Schenkelfedern 8 können selbstverständlich auch andere geeignete Federeinrichtungen eingesetzt werden, so etwa Spiralfedern, die z.B. um den Gelenkpunkt 5 herum verlaufen, oder geeignet angebrachte Blattfedern o.ä.

**Patentansprüche**

1. Gleitschutzvorrichtung für Fahrzeugreifen mit einer gegen die Innenseite des Reifens zur Anlage kommenden inneren sowie mit einer äußeren Halterung für sich über die Reifenlauffläche erstreckende Kettenstrangabschnitte, bei der die innere Halterung in montiertem Zustand etwa kreisförmig ausgebildet ist und einen mittleren Halterungsabschnitt (1, 2) aufweist, an dessen beiden Enden jeweils über ein Drehgelenk (6, 7) ein Seitenteil (3, 4) verschwenkbar befestigt ist, wobei die Seitenteile (3, 4) zur Montage der inneren Halterung vom mittleren Halterungsabschnitt (1, 2) nach außen aufklappbar und jeweils mittels einer Federeinrichtung in Richtung auf eine geschlossene Form der inneren Halterung vorgespannt sind, dadurch gekennzeichnet, daß der mittlere Halterungsabschnitt aus mindestens zwei Teilabschnitten (1, 2) besteht, die zueinander verschwenkbar miteinander verbunden und ebenfalls in Richtung auf eine geschlossene Form der inneren Halterung (1, 2, 3, 4) vorgespannt sind.

2. Gleitschutzvorrichtung nach Anspruch 1, dadurch gekennzeichnet, daß die Teilabschnitte (1, 2) im Endbereich ihrer einander zugewandten Enden über ein Drehgelenk (5) oder ein elastisches Gelenk miteinander verbunden sind.

3. Gleitschutzvorrichtung nach Anspruch 1 oder 2, dadurch gekennzeichnet, daß der mittlere Halterungsabschnitt aus wenigstens drei und höchstens fünf Teilabschnitten besteht.

4. Gleitschutzvorrichtung nach einem der Ansprüche 1 bis 3, dadurch gekennzeichnet, daß für die Vorspannung der Teilabschnitte (1, 2) jeweils Schenkelfedern (8) vorgesehen sind, die sich einerseits am Drehgelenk (5) sowie andererseits mit ihren Schenkeln (10, 11) jeweils am anderen Teilabschnitt (2, 1) abstützen.

5. Gleitschutzvorrichtung nach Anspruch 4, dadurch gekennzeichnet, daß für einige oder alle Drehgelenke (5) erste Anschläge (14) derart angeordnet sind, daß jeweils zwei Teilabschnitte (1, 2) bei Erreichen einer Lage, in der sie gemeinsam einen Kreisbogenabschnitt bilden, gegegen eine weitere Verschwenkung in Richtung der Vorspannung blockiert sind.

6. Gleitschutzvorrichtung nach Anspruch 5, dadurch gekennzeichnet, daß auch Anschläge (14) derart vorgesehen sind, daß die Teilabschnitte (1, 2) nur um einen vorgegebenen Spreizwinkel zueinander verschwenkbar sind.

7. Gleitschutzvorrichtung nach Anspruch 6, dadurch gekennzeichnet, daß die Enden (22, 23) zweier drehbar aneinander befestigter Teilabschnitte (1, 2) jeweils über das Drehgelenk (5) vorstehen und daß im Bereich dieser freien Enden (22, 23) jeweils Anschläge (14) am anderen Teilabschnitt (2, 1) befestigt sind, die in Form einer U-förmigen Klammer den Teilabschnitt (2; 1) derart umfassen, daß zwischen dem die Klammerschenkel verbindenden Zwischensteg (24) und einer Seitenfläche des Teilabschnitts (1, 2) ein Spalt (B) ausgebildet wird, in den das über das Drehgelenk (5) überstehende freie Ende (22) des anderen Teilabschnittes (2) eingreift.

8. Gleitschutzvorrichtung nach Anspruch 7, dadurch gekennzeichnet, daß der Anschlag als eine den Profilquerschnitt (25) des Teilabschnitts (1) vollständig umschließende Rundklammer (26) ausgebildet ist, die auf einer Seitenfläche des Teilabschnitts (1) von dieser zur Ausbildung des Spaltes (B) übersteht.

## Claims

1. Anti-skid device for vehicle tyres with an inner mounting which comes into engagement with the inner side of the tyre and an outer mounting for chain strand segments extending over the running surface of the tyre, in which the inner mounting is of approximately circular shape in the installed state and has a middle mounting section (1, 2) to the two ends of which a respective side member (3, 4) is pivotally secured by means of a pivotal joint (6, 7), the side members (3, 4) being capable of being swung outwardly from the middle mounting section (1, 2) for the purpose of fitting the inner mounting and each being biased by means of a spring device in the direction of a closed shape of the inner mounting, characterised in that the middle mounting section comprises at least two portions (1, 2) which are connected together so as to be pivotable towards one another and are also biased in the direction of a closed shape of the inner mounting (1, 2, 3, 4).

2. Anti-skid device as claimed in claim 1, characterised in that the portions (1, 2) are connected together in the end region of their ends which are directed towards one another by means of a pivotal joint or an elastic joint.

3. Anti-skid device as claimed in claim 1 or 2, characterised in that the middle mounting section comprises at least three and at most five portions.

4. Anti-skid device as claimed in one of claims 1 to 3, characterised in that for the biasing of the portions (1, 2) respective spring clips (8) are provided which engage the pivotal joint (5) on the one hand and the respective other portion (2, 1) with their limbs (10, 11) on the other hand.

5. Anti-skid device as claimed in claim 4, characterised in that first abutments (14) are so arranged for some or all of the pivotal joints (5) that when two portions (1, 2) reach a position in which they together define a circular arc they are blocked from pivoting further in the biasing direction.

6. Anti-skid device as claimed in claim 5 characterised in that abutments (14) are also so provided that the portions (1, 2) are only pivotable towards one another through a predetermined angle.

7. Anti-skid device as claimed in claim 6, characterised in that the ends (22, 23) of two portions (1, 2) rotatably connected together each project beyond the pivotal joint (5) and that in the vicinity of these free ends (22, 23) respective abutments (14) are connected to the other portion (2, 1) which in the shape of a U-shaped clip surround the portion (2; 1) in such a manner that defined between the intermediate web (24) connecting the limbs of the clip and a side surface of the portion (1, 2) a gap (B) is defined in which the free end (22) of the other portion (2) projecting beyond the pivotal joint (5) engages.

8. Anti-skid device as claimed in claim 7, characterised in that the abutment is constructed as a round clip (26) completely surrounding the profile section (25) of the portion (1), which clip projects on a side surface of the portion (1) from the latter to define the gap (B).

## Revendications

1. Dispositif anti-dérapant pour des pneumatiques de véhicules, comportant un support intérieur venant s'appuyer contre le côté intérieur du pneu, ainsi qu'un support extérieur pour des tronçons de chaîne s'étendant sur la surface de roulement du pneu, dispositif dans lequel le support intérieur, une fois monté, est sensiblement de forme circulaire et comporte une portion médiane de support (1, 2) aux deux extrémités de laquelle est fixée à pivotement, par une articulation pivotante (6, 7), une partie latérale (3, 4), les parties latérales (3, 4) pouvant être rabattues de la portion médiane du support (1, 2) vers l'extérieur, pour le montage du support intérieur et étant précontraintes au moyen d'un dispositif de ressort dans le sens de la forme fermée du support intérieur, caractérisé en ce que la portion de support médiane est constituée par au moins deux sections (1, 2) qui sont reliées ensemble en pouvant pivoter l'une vers l'autre et sont précontraintes également dans le sens de la forme fermée du support intérieur (1, 2, 3, 4).

2. Dispositif anti-dérapant selon la revendication 1, caractérisé en ce que les sections (1, 2) sont reliées ensemble, dans la zone terminale de leurs extrémités tournées l'une vers l'autre, par une articulation de pivotement (5) ou une articulation élastique.

3. Dispositif anti-dérapant selon la revendication 1 ou 2, caractérisé en ce que la portion médiane de support est constituée par au moins trois et au plus cinq sections.

4. Dispositif anti-dérapant selon l'une des revendications 1 à 3, caractérisé en ce qu'on prévoit pour la précontrainte des sections (1, 2) respectivement des ressorts à branches (8) qui s'appuient, d'une part sur l'articulation de pivotement (5) et d'autre part, par leurs branches (10, 11) respectivement sur l'autre section (1, 2).

5. Dispositif anti-dérapant selon la revendication 4, caractérisé en ce qu'on dispose, pour quelques-unes des articulations de pivotement (5), ou pour toutes, des premières butées (14) de telle sorte que deux sections (1, 2), une fois atteinte une position dans laquelle elles forment ensemble un arc de cercle, sont bloquées pour les empêcher de pivoter davantage dans le sens de la précontrainte.

6. Dispositif anti-dérapant selon la revendication 5, caractérisé en ce qu'on prévoit également des butées (14) de telle sorte que les sections (1, 2) ne peuvent pivoter l'une vers l'autre que d'un angle d'écartement prédéterminé.

7. Dispositif anti-dérapant selon la revendication 6, caractérisé en ce que les extrémités (22, 23) de deux sections (2, 1) articulées l'une sur l'autre, dépassent respectivement au dessus de l'articulation de pivotement (5), et en ce que dans la zone de ces extrémités libres (22, 23), des butées (14) sont respectivement fixées sur l'autre section (1, 2), qui, sous la forme d'une bride en forme de U entourant la section (1, 2) de telle sorte qu'il se forme entre la branche médiane (24) reliant les deux ailes de la bride et une surface latérale de la section (1, 2) une fente (B) dans laquelle pénètre l'extrémité libre (22, 23) de l'autre section (2, 1) qui dépasse au dessus de l'articulation de pivotement (5).

8. Dispositif anti-dérapant selon la revendication 7, caractérisé en ce que la butée est réalisée sous forme d'une bride ronde (26) entourant complètement la section transversale du profil (25) de la section (1), laquelle bride dépasse sur une surface latérale de la section (1), au dessus de celle-ci, pour former la fente (B).

FIG.1

FIG. 2

FIG. 3

FIG. 4

FIG. 5

FIG.6

EP 0 155 988 B1